# EUROPEAN PATENT APPLICATION

(11) **EP 4 835 640 A1**
(43) Date of publication of application: **04.11.2026**
(21) Application number: 25211678.5
(22) Date of filing: 28.10.2025
(51) Int. Cl.: G06F 3/12, G06T 7/00, H04N 1/00

(54) **PRINTING INSPECTION SYSTEM, PROGRAM, AND PRINTING INSPECTION METHOD**

(30) Priority: 30.04.2025 JP 2025075575
(71) Applicant: FUJIFILM Business Innovation Corp., Minato-ku Tokyo (JP)
(72) Inventor: MISAWA, Satoshi, Yokohama-shi, Kanagawa (JP)
(74) Representative: Becker Kurig & Partner Patentanwälte mbB

(57) **Abstract**

A printing inspection system includes a processor configured to: calculate, as an inspection-allowable time, an inspection upper limit time per sheet of paper for which inspection is performable without stopping a printing process, based on a printing speed of printed matter to be printed; calculate, as an inspection-required time, an inspection time per sheet of paper in a case where an inspection item selected from among multiple inspection items is performed on the printed matter; and display the inspection-allowable time and the inspection-required time on a display unit.

## Description

### BACKGROUND OF THE INVENTION

### (i) Field of the Invention

The present disclosure relates to a printing inspection system, a program, and a printing inspection method.

### (ii) Description of Related Art

JP2023-082318A discloses a method for inspecting printed matter, the method including: specifying a required time for inspecting printed content that is printed on paper by using an attribute value obtained by recognizing the printing content; and notifying a user of a result of comparing the specified required time with a time limit for inspecting the printed content.

JP2024-022487A discloses an inspection system that reduces a burden on a user in image inspection by inspecting an image on a sheet that corresponds to a region of content in a reference image at a set inspection level based on first image data obtained by reading an image formed on a sheet to be transported and second image data corresponding to the reference image.

### SUMMARY OF THE INVENTION

A printing inspection system is used that inspects printed matter for the presence or absence of a defect such as print contamination or printing failure while executing a printing process on the printed matter, and that switches a discharge destination of paper on which a defect is detected. In a case of inspecting the printed matter, it is necessary to determine the presence or absence of the defect before paper on which printing has been performed passes through a switching device that switches the discharge destination. However, the more inspection items for inspecting the printed matter increase and the wider the inspection range becomes, the longer the inspection time of the printed matter becomes. Therefore, in a case where the inspection time becomes long and the inspection speed fails to keep up with the printing speed, a situation occurs in which the presence or absence of the defect cannot be determined before the paper on which printing has been performed passes through the switching device. In a case where such a situation occurs, the paper on which the defect is detected is discharged to the same discharge destination as normal paper.

An object of the technology of the present disclosure is to provide a printing inspection system, a program, and a printing inspection method capable of selecting and setting, from among a plurality of inspection items, a combination of inspection items that enable inspection of printed matter at an inspection speed keeping up with a printing speed.

According to a first aspect of the present disclosure, there is provided a printing inspection system including a processor configured to calculate, as an inspection-allowable time, an inspection upper limit time per sheet of paper for which inspection is performable without stopping a printing process, based on a printing speed of printed matter to be printed, calculate, as an inspection-required time, an inspection time per sheet of paper in a case where an inspection item selected from among a plurality of inspection items is performed on the printed matter, and display the inspection-allowable time and the inspection-required time on a display unit.

According to a second aspect of the present disclosure, in the printing inspection system according to the first aspect, the processor may be configured to: present, to a user, a combination of inspection items selected in order of higher preset priority from among the plurality of inspection items, within a range in which the inspection-required time does not exceed the inspection-allowable time.

According to a third aspect of the present disclosure, the printing inspection system according to the second aspect may further include a memory, the memory may store an inspection priority list in which a priority is set for each type of the inspection items, and the processor may be configured to select inspection items in order of higher priority set in the inspection priority list from among the plurality of inspection items, and present, to the user, a combination of inspection items in which an inspection-required time by the selected inspection items does not exceed the inspection-allowable time.

According to a fourth aspect of the present disclosure, in the printing inspection system according to any one of the first to third aspects, the processor may be configured to, in a case where inspection content of the printed matter is selected to be prioritized over maintaining the printing speed, enable selection of a combination of inspection items in which the inspection-required time exceeds the inspection-allowable time.

According to a fifth aspect of the present disclosure, in the printing inspection system according to the fourth aspect, the processor may be configured to, in a case where the combination of the inspection items in which the inspection-required time exceeds the inspection-allowable time is selected, change the printing speed of the printed matter such that the inspection-allowable time is longer than an inspection-required time by the selected combination of the inspection items.

According to a sixth aspect of the present disclosure, there is provided a program causing a computer to execute calculating, as an inspection-allowable time, an inspection upper limit time per sheet of paper for which inspection is performable without stopping a printing process, based on a printing speed of printed matter to be printed, calculating, as an inspection-required time, an inspection time per sheet of paper in a case where an inspection item selected from among a plurality of inspection items is performed on the printed matter, and displaying the inspection-allowable time and the inspection-required time on a display unit.

According to a seventh aspect of the present disclosure, there is provided a printing inspection method including calculating, as an inspection-allowable time, an inspection upper limit time per sheet of paper for which inspection is performable without stopping a printing process, based on a printing speed of printed matter to be printed, calculating, as an inspection-required time, an inspection time per sheet of paper in a case where an inspection item selected from among a plurality of inspection items is performed on the printed matter, and displaying the inspection-allowable time and the inspection-required time on a display unit.

With the printing inspection system according to the first aspect of the present disclosure, it is possible to select and set, from among the plurality of inspection items, a combination of inspection items that enable inspection of the printed matter at an inspection speed keeping up with the printing speed.

With the printing inspection system according to the second aspect of the present disclosure, it is possible to automatically present, to the user, the combination of the inspection items in which the inspection-required time does not exceed the inspection-allowable time.

With the printing inspection system according to the third aspect of the present disclosure, by simply setting up the inspection priority list in advance, it is possible to automatically present, to the user, the combination of the inspection items in which the inspection-required time does not exceed the inspection-allowable time.

With the printing inspection system according to the fourth aspect of the present disclosure, it is possible to select a combination of the inspection items in which the needed inspection content of the printed matter is realized without being limited by the printing speed.

With the printing inspection system according to the fifth aspect of the present disclosure, it is possible to prevent a situation in which the inspection speed fails to keep up with the printing speed even in a case where the combination of the inspection items in which the inspection-required time exceeds the inspection-allowable time is selected.

With the program according to the sixth aspect of the present disclosure, it is possible to select and set, from among the plurality of inspection items, a combination of inspection items that enable inspection of the printed matter at an inspection speed keeping up with the printing speed.

With the printing inspection method according to the seventh aspect of the present disclosure, it is possible to select and set, from among the plurality of inspection items, a combination of inspection items that enable inspection of the printed matter at an inspection speed keeping up with the printing speed.

### BRIEF DESCRIPTION OF THE DRAWINGS

Exemplary embodiment(s) of the present invention will be described in detail based on the following figures, wherein:
FIG. 1 is a diagram showing a system configuration of an image forming system according to an exemplary embodiment of the present disclosure;
FIG. 2 is a diagram for describing a flow of a process of inspecting printed matter in the image forming system according to the exemplary embodiment of the present disclosure;
FIG. 3 is a block diagram showing a hardware configuration of a terminal device 10 according to the exemplary embodiment of the present disclosure;
FIG. 4 is a block diagram showing a functional configuration of the terminal device 10 according to the exemplary embodiment of the present disclosure;
FIG. 5 is a diagram showing an example of an inspection priority list in which a priority is set for each type of inspection items;
FIG. 6 is a flowchart for describing an operation of the terminal device 10 in a case of performing inspection setting;
FIG. 7 is a diagram showing an example of an inspection target document;
FIG. 8 is a flowchart showing detailed processing for determining a combination candidate of the inspection items based on the priority list as shown in step S105; and
FIG. 9 is a diagram showing a display screen example in a case of presenting the combination candidate of the inspection items to a user.

### DETAILED DESCRIPTION OF THE INVENTION

Hereinafter, an exemplary embodiment of the present disclosure will be described in detail with reference to the drawings.

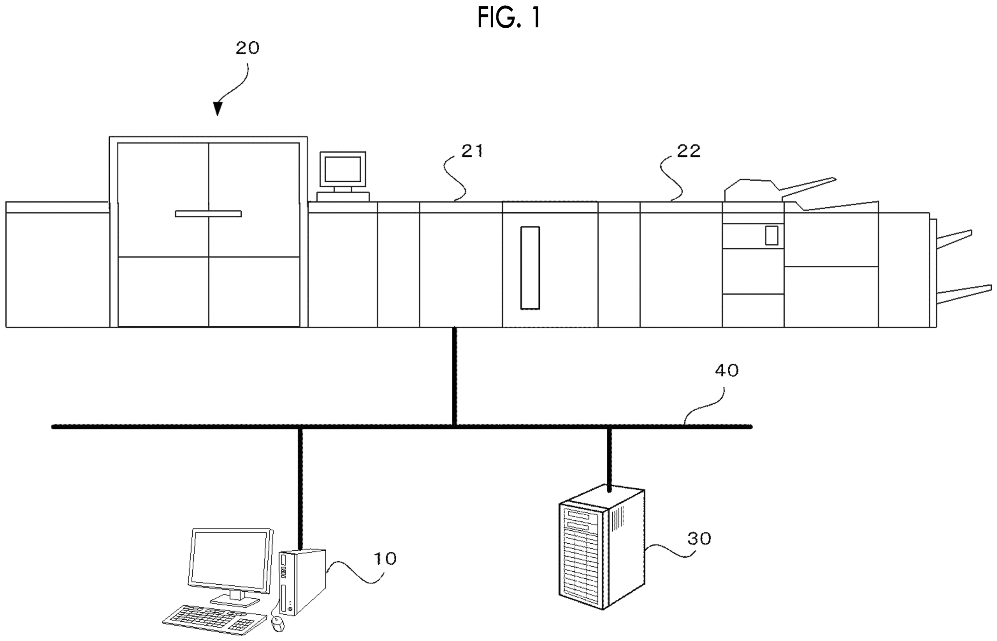

FIG. 1 is a diagram showing a system configuration of an image forming system according to an exemplary embodiment of the present disclosure.

As shown in FIG. 1, the image forming system according to the exemplary embodiment of the present disclosure includes a terminal device 10, a printing device 20, and an inspection device 30 that are connected to each other by a network 40. The terminal device 10 generates print data based on an image to be printed, and transmits the generated print data to the printing device 20 via the network 40. The printing device 20 receives the print data transmitted from the terminal device 10, and prints an image corresponding to the print data on paper. Further, the printing device 20 includes a reading device 21 and a switching device 22. The reading device 21 reads the image printed on the paper and transmits the image as a scan image to the inspection device 30. The switching device 22 switches a discharge destination to which the paper transported through a transport path is discharged, based on an instruction from the terminal device 10. The printing device 20 has a plurality of discharge destinations.

The inspection device 30 is a device for inspecting the presence or absence of a defect in an image to be printed by the printing device 20. The inspection device 30 receives, from the terminal device 10, a raster image processing (RIP) image of the image to be printed by the printing device 20 as a reference image. The RIP image is an image in which the image to be printed is represented in a bitmap format. The inspection device 30 inspects printed matter for the presence or absence of a defect such as contamination, chips, streaks, paper folds, and printing misregistration by collating the reference image received from the terminal device 10 with the scan image received from the reading device 21 of the printing device 20.

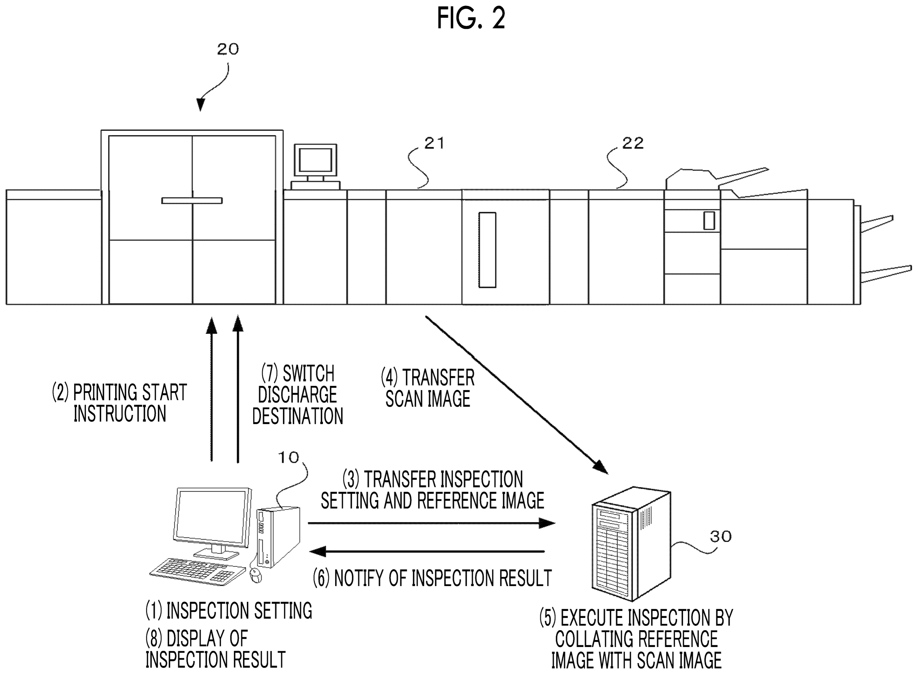

Next, a flow of a process of inspecting the printed matter in the image forming system as described above will be described with reference to FIG. 2.
(1) First, in the terminal device 10, inspection setting is performed for setting which region of the printed matter is subjected to which inspection.
(2) Then, the terminal device 10 instructs the printing device 20 to start printing.
(3) Further, the terminal device 10 transmits the inspection setting for the inspection to be performed on the printed matter to the inspection device 30 together with the reference image of the printed matter.
(4) Thereafter, in a case where the actual printing process is started, the reading device 21 reads an image of paper on which printing has been performed for each page and sequentially transfers the image as the scan image to the inspection device 30.
(5) Then, the inspection device 30 inspects whether or not there is a defect in the printed matter by collating the scan image transferred from the reading device 21 with the reference image. Specifically, in a case where the reference image received from the terminal device 10 and the scan image from the reading device 21 match each other, the inspection device 30 determines that there is no problem with the printed image. However, in a case where the reference image received from the terminal device 10 and the scan image from the reading device 21 are different from each other by a preset reference or more, the inspection device 30 determines that there is a problem with the printed image.
   In a case where all pages of the printed matter have the same content, there is only one reference image. Therefore, the inspection device 30 continues to compare one reference image with the scan image sequentially transferred from the reading device 21. It should be noted that, in a case of the printed matter in which the printed content is different for each page, the reference image is sequentially transmitted from the terminal device 10 to the inspection device 30 for each page. Then, the inspection device 30 compares the reference image sequentially transmitted from the terminal device 10 with the scan image sequentially transferred from the reading device 21.
(6) Then, every time the inspection is performed, the inspection device 30 notifies the terminal device 10 of an inspection result.
(7) The terminal device 10 receives the inspection result from the inspection device 30 and controls the switching device 22 so that printed pages that are determined to have a problem in the inspection device 30 are discharged to a discharge destination different from a discharge destination to which normal printed pages are discharged.
(8) In addition, in the terminal device 10, the inspection result from the inspection device 30 is displayed on a screen.

By performing such a process, pages determined to have no problems in the inspection and pages determined to have problems in the inspection are discharged to different discharge destinations. That is, it is possible to detect the defect such as contamination, chips, streaks, paper folds, and printing misregistration in the printed matter, and to remove the printed matter having the defect. In addition, inspection can be performed by reading an image of a one-dimensional code such as a barcode included in the printed matter and an image of a two-dimensional code such as a QR code (registered trademark) and determining whether or not the image matches preset information.

The terminal device 10 that performs the inspection setting and the inspection device 30 that performs the inspection on the printed matter based on the inspection setting set in the terminal device 10 constitute a printing inspection system.

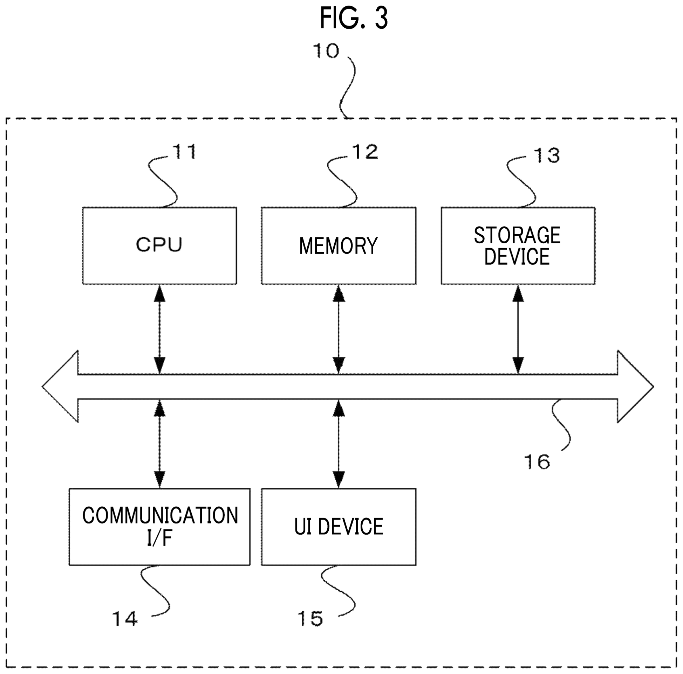

Next, a hardware configuration of the terminal device 10 in the image forming system according to the present exemplary embodiment is shown in FIG. 3.

As shown in FIG. 3, the terminal device 10 includes a CPU 11, a memory 12, a storage device 13 such as a hard disk drive, a communication interface (IF) 14 for transmitting and receiving data to and from an external device via the network 40, and a user interface (UI) device 15 including a touch panel or a liquid crystal display and a keyboard. These components are connected to each other via a control bus 16.

The CPU 11 is a processor that controls an operation of the terminal device 10 by executing a predetermined process based on a control program stored in the memory 12 or the storage device 13. In the present exemplary embodiment, a configuration in which the CPU 11 reads the control program stored in the memory 12 or the storage device 13 and executes the control program has been described, but the present disclosure is not limited to this. The control program may be provided in a form of being recorded on a computer-readable recording medium. For example, the program may be provided in a form of being recorded on an optical disk such as a compact disc (CD)-ROM and a digital versatile disc (DVD)-ROM, or in a form of being recorded on a semiconductor memory such as a universal serial bus (USB) memory and a memory card. In addition, the control program may be acquired from an external device via a communication line connected to the communication interface 14. Further, the control program may be provided, for example, as single application software or may be incorporated, as one function of the terminal device 10, in software of each device.

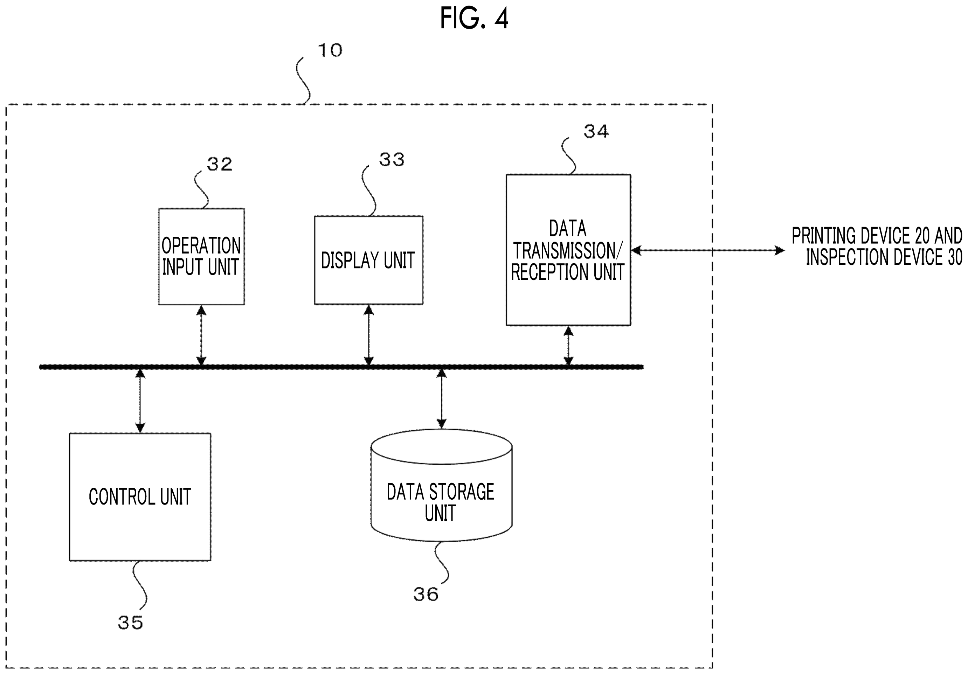

FIG. 4 is a block diagram showing a functional configuration of the terminal device 10 realized by executing the above control program.

As shown in FIG. 4, the terminal device 10 according to the present exemplary embodiment includes an operation input unit 32, a display unit 33, a data transmission/reception unit 34, a control unit 35, and a data storage unit 36.

The data transmission/reception unit 34 transmits and receives data to and from an external device such as the printing device 20 and the inspection device 30.

The control unit 35 transmits a printing start instruction and a discharge destination switching instruction to the printing device 20 via the data transmission/reception unit 34, or transmits the inspection setting and the RIP image to the inspection device 30. In addition, the control unit 35 receives the inspection result from the inspection device 30 via the data transmission/reception unit 34. The data storage unit 36 stores various types of data such as the RIP image, the inspection setting, and the inspection result generated in the terminal device 10.

The display unit 33 is controlled by the control unit 35 and displays various types of information to a user. The operation input unit 32 inputs information on various operations performed by the user. The control unit 35 receives the inspection setting from the user via the operation input unit 32, and displays the content of the received inspection setting on the display unit 33.

In a case of inspecting the printed matter in the image forming system according to the present exemplary embodiment, it is necessary to determine the presence or absence of the defect before paper on which printing has been performed passes through the switching device 22. However, the more inspection items for inspecting the printed matter increase and the wider the inspection range becomes, the longer the inspection time of the printed matter becomes. Therefore, in a case where the inspection time becomes long and the inspection speed fails to keep up with the printing speed, a situation occurs in which the presence or absence of the defect cannot be determined before the paper on which printing has been performed passes through the switching device 22. In a case where such a situation occurs, the paper on which the defect is detected is discharged to the same discharge destination as normal paper.

Therefore, in the printing inspection system according to the present exemplary embodiment, with a method described below, it is possible to select and set, from among a plurality of inspection items, a combination of inspection items that enable inspection of the printed matter at an inspection speed keeping up with the printing speed.

Next, an operation of the printing inspection system according to the present exemplary embodiment will be described in detail with reference to the drawings.

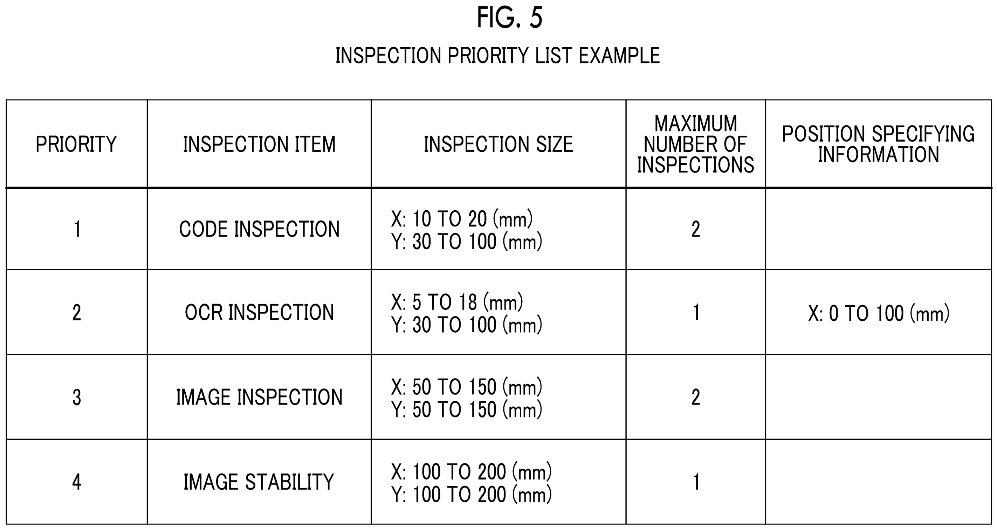

First, the data storage unit 36 of the terminal device 10 according to the present exemplary embodiment stores an inspection priority list as shown in FIG. 5. In the inspection priority list, as shown in FIG. 5, a priority is set for each type of the inspection items. Specifically, code inspection for inspecting whether or not a code image such as a one-dimensional code and a two-dimensional code included in an image can be correctly read has a first priority and is set as the highest priority. In addition, priorities are also set in order for optical character reading (OCR) inspection for reading and inspecting text in the image, image inspection, and image stability inspection.

In a case of the inspection setting in the terminal device 10, the control unit 35 calculates, as an inspection-allowable time, an inspection upper limit time per sheet of paper for which inspection can be performed without stopping a printing process based on a printing speed of the printed matter to be printed. Then, the control unit 35 calculates, as an inspection-required time, an inspection time per sheet of paper in a case where an inspection item selected from among a plurality of inspection items is performed on the printed matter. Then, the control unit 35 displays the calculated inspection-allowable time and inspection-required time on the display unit 33.

The control unit 35 may present, to the user, a combination of inspection items selected in order of higher preset priority from among the plurality of inspection items, within a range in which the inspection-required time does not exceed the inspection-allowable time. Specifically, the control unit 35 selects inspection items in order of higher priority set in the inspection priority list shown in FIG. 5 in order from among the plurality of inspection items, and presents, to the user, a combination of inspection items in which an inspection-required time by the selected inspection items does not exceed the inspection-allowable time.

Further, in a case where inspection content of the printed matter is selected to be prioritized over maintaining the printing speed, the control unit 35 may enable selection of a combination of inspection items in which the inspection-required time exceeds the inspection-allowable time. Then, in a case where the combination of the inspection items in which the inspection-required time exceeds the inspection-allowable time is selected, the control unit 35 changes the printing speed of the printed matter such that the inspection-allowable time is longer than an inspection-required time by the selected combination of the inspection items.

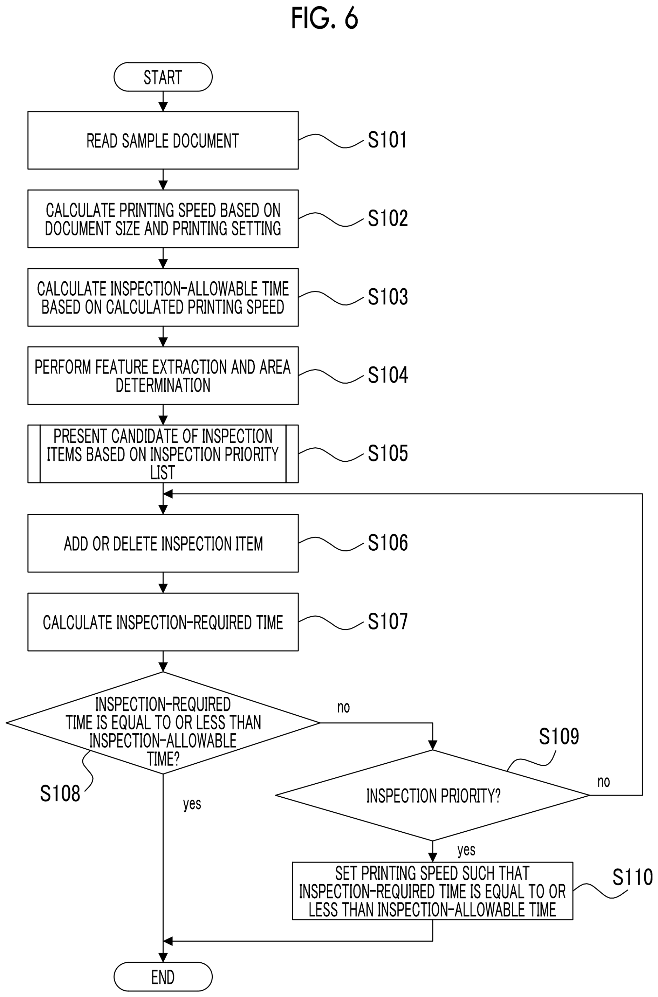

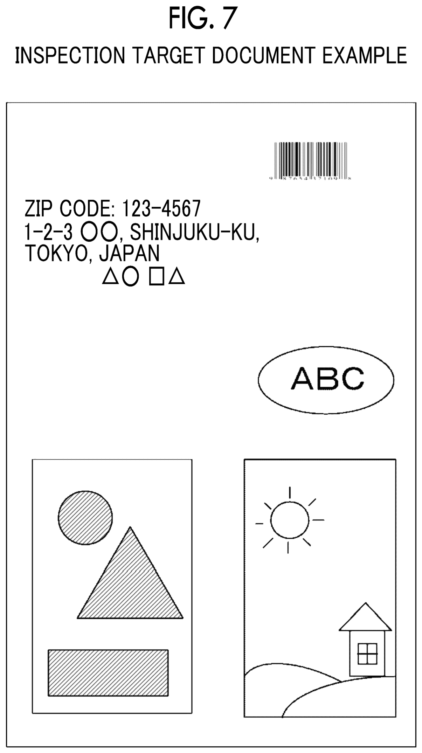

Next, an operation of the terminal device 10 in a case of performing the inspection setting will be described with reference to a flowchart of FIG. 6. In addition, in the following description, a case in which a document as shown in FIG. 7 is set as an inspection target document will be described.

First, in step S101, the control unit 35 reads a document to be inspected, as shown in FIG. 7, as a sample document. Then, in step S102, the control unit 35 calculates the printing speed based on the document size and printing setting of the read sample document. Then, in step S103, the control unit 35 calculates the inspection-allowable time based on the calculated printing speed. For example, in a case where the printing speed is 80 pages per minute, the inspection-allowable time is 750 ms (60 seconds/80 pages).

Next, in step S104, the control unit 35 performs feature extraction and area determination on an image of the sample document. Specifically, the control unit 35 determines which region of the document image has what feature.

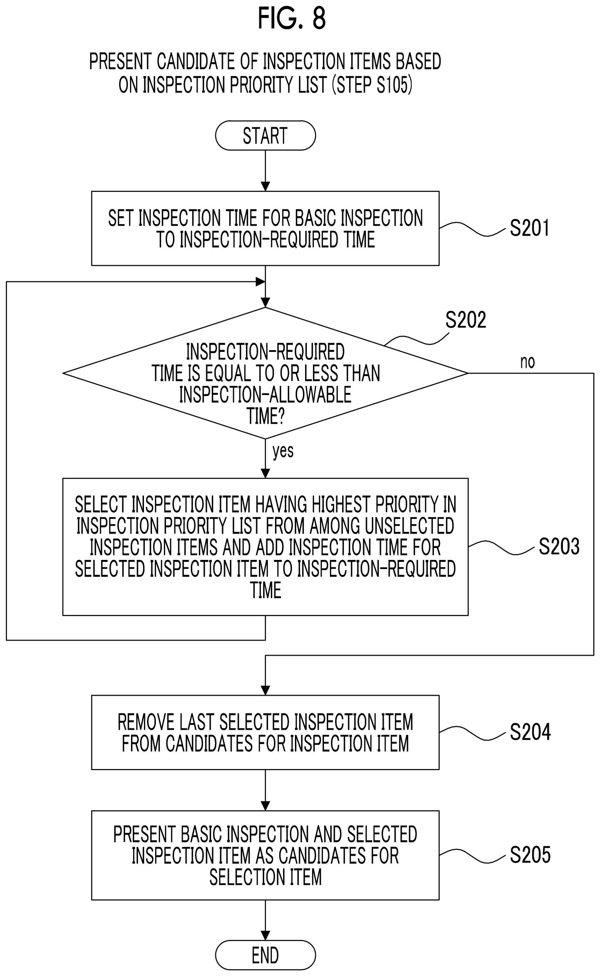

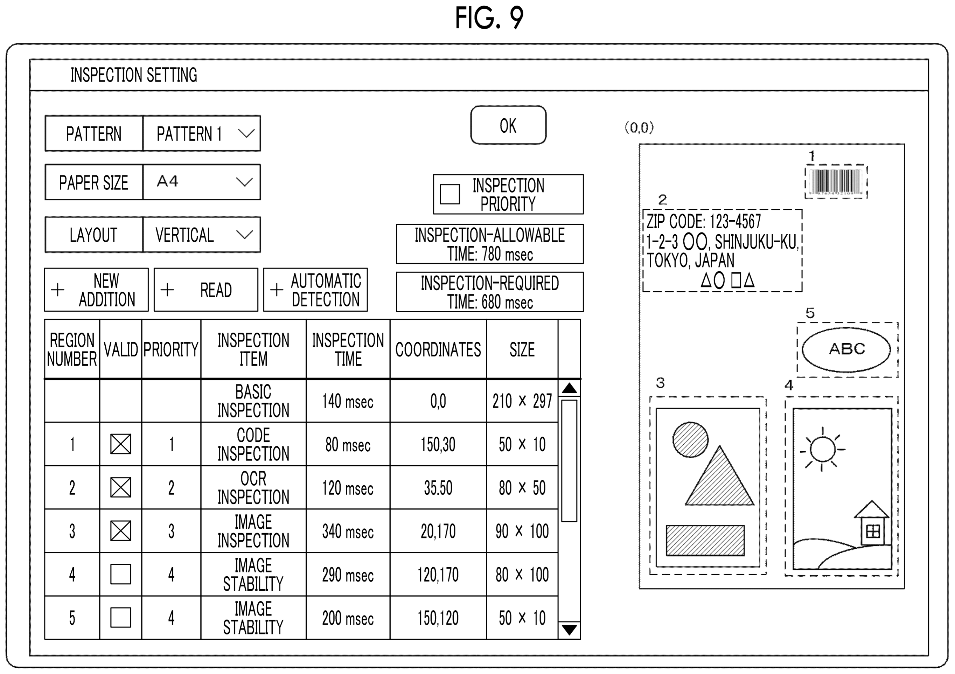

Then, in step S105, the control unit 35 presents, to the user, a combination candidate of the inspection items in which the inspection-required time does not exceed the inspection-allowable time, based on the inspection priority list shown in FIG. 5. Detailed processing for determining the combination candidate of the inspection items based on such a priority list is shown in a flowchart of FIG. 8. In addition, FIG. 9 shows a display screen example in a case where the combination candidate of the inspection items is presented to the user by performing such processing.

First, in step S201, the control unit 35 sets the inspection time for the basic inspection to the inspection-required time. The inspection time for the basic inspection is a time required for the inspection according to the document size regardless of the selection of the inspection items. In the display screen example shown in FIG. 9, the inspection time for the basic inspection is 140 ms.

Then, in step S202, the control unit 35 determines whether or not the current inspection-required time is equal to or less than the inspection-allowable time. Then, in a case where it is determined in step S202 that the current inspection-required time is equal to or less than the inspection-allowable time, the control unit 35 selects, in step S203, an inspection item having the highest priority set in the inspection priority list from among unselected inspection items. Then, the control unit 35 adds the inspection time for the selected inspection item to the inspection-required time.

For example, since the inspection time for the code inspection having the highest priority is 80 ms, the control unit 35 adds 80 ms to the inspection time of 140 ms for the basic inspection. That is, at this stage, the inspection-required time is 220 ms. Then, in step S202, the control unit 35 determines whether or not the current inspection-required time is equal to or less than the inspection-allowable time.

That is, in step S202, the inspection items are sequentially selected in descending order of priority until the inspection-required time exceeds the inspection-allowable time. Then, in a case where it is determined in step S202 that the current inspection-required time is not equal to or less than the inspection-allowable time, the control unit 35 removes the last selected inspection item from candidates for the inspection item in step S204. Then, the control unit 35 subtracts the inspection time for the inspection item removed from the candidates for the inspection item, from the inspection-required time. Finally, in step S205, the control unit 35 presents the basic inspection and the selected inspection items as candidates for selection items.

By performing such processing, the candidates for the inspection item as shown in the display screen example of FIG. 9 are presented to the user. In the display screen example of FIG. 9, the basic inspection, the code inspection, the OCR inspection, and the image inspection are automatically shown as the candidates for the selection items. Further, the display screen of FIG. 9 shows that the inspection-allowable time based on the current printing speed is "780 ms", and that the inspection-required time in a case of performing the inspection of the selected inspection items is "680 ms". That is, the inspection-required time, which is the total of the inspection times for the basic inspection, the code inspection, the OCR inspection, and the image inspection, is equal to or less than the inspection-allowable time, and it can be seen that inspection can be performed without interrupting the printing process.

Then, in step S106, the control unit 35 receives the addition or deletion of the inspection item by the user via such a display screen. Here, in a case where the user performs the operation of adding or deleting the inspection item, the inspection-required time also changes accordingly. That is, the user can select the inspection items to be actually performed while comparing the inspection-required time with the inspection-allowable time.

Then, in step S107, the control unit 35 recalculates the inspection-required time.

Next, in step S108, the control unit 35 determines whether or not the inspection-required time is equal to or less than the inspection-allowable time.

Then, in a case where it is determined in step S108 that the inspection-required time is equal to or less than the inspection-allowable time, the control unit 35 ends the processing. In this case, the selected inspection items are set as the inspection items to be executed on the printed matter.

In a case where it is determined in step S108 that the inspection-required time is longer than the inspection-allowable time, the control unit 35 determines, in step S109, whether or not the inspection priority is selected. Here, the selection of the inspection priority means a state in which a check box in which the text "inspection priority" is displayed on the display screen shown in FIG. 9 is selected. The inspection priority means that a priority is given to executing the inspection of the selected inspection item even at the cost of a decrease in the printing speed.

In a case where it is determined in step S109 that the inspection priority is not selected, the control unit 35 returns to the process of adding or deleting the inspection item in step S106. In this case, the control unit 35 may gray out and disable an "OK" button on the display screen shown in FIG. 9 and prompt the user to reselect the inspection items in which the inspection-required time is equal to or less than the inspection-allowable time.

Then, in a case where it is determined in step S109 that the inspection priority is selected, the control unit 35 sets the printing speed such that the inspection-required time is equal to or less than the inspection-allowable time in step S110. That is, the control unit 35 reduces the printing speed of the printing process executed by the printing device 20, thereby making the inspection-required time equal to or less than the inspection-allowable time.

In a case of calculating the inspection time for each inspection item, the control unit 35 calculates the inspection time for each inspection item by multiplying an area of an inspection target region by a coefficient corresponding to the type of the inspection item and adding a basic time for each inspection item. That is, the coefficient becomes larger as the inspection items require more time to execute, and the inspection time becomes longer as the inspection target region becomes wider.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The "system" in the present exemplary embodiment includes both a system that is configured by a plurality of apparatuses and a system that is configured by a single apparatus.

The present disclosure can also be applied to a program and a program product.

### [Supplementary Note]

(((1))) A printing inspection system comprising:
   a processor configured to:
   calculate, as an inspection-allowable time, an inspection upper limit time per sheet of paper for which inspection is performable without stopping a printing process, based on a printing speed of printed matter to be printed;
   calculate, as an inspection-required time, an inspection time per sheet of paper in a case where an inspection item selected from among a plurality of inspection items is performed on the printed matter; and
   display the inspection-allowable time and the inspection-required time on a display unit.
(((2))) The printing inspection system according to (((1))), wherein the processor is configured to:
   present, to a user, a combination of inspection items selected in order of higher preset priority from among the plurality of inspection items, within a range in which the inspection-required time does not exceed the inspection-allowable time.
(((3))) The printing inspection system according to (((2))), further comprising:
   a memory,
   wherein the memory stores an inspection priority list in which a priority is set for each type of the inspection items, and
   the processor is configured to:
      select inspection items in order of higher priority set in the inspection priority list from among the plurality of inspection items, and present, to the user, a combination of inspection items in which an inspection-required time by the selected inspection items does not exceed the inspection-allowable time.
(((4))) The printing inspection system according to any one of (((1))) to (((3))), wherein the processor is configured to:
   in a case where inspection content of the printed matter is selected to be prioritized over maintaining the printing speed, enable selection of a combination of inspection items in which the inspection-required time exceeds the inspection-allowable time.
(((5))) The printing inspection system according to (((4))), wherein the processor is configured to:
   in a case where the combination of the inspection items in which the inspection-required time exceeds the inspection-allowable time is selected, change the printing speed of the printed matter such that the inspection-allowable time is longer than an inspection-required time by the selected combination of the inspection items.
(((6))) A program causing a computer to execute:
   calculating, as an inspection-allowable time, an inspection upper limit time per sheet of paper for which inspection is performable without stopping a printing process, based on a printing speed of printed matter to be printed;
   calculating, as an inspection-required time, an inspection time per sheet of paper in a case where an inspection item selected from among a plurality of inspection items is performed on the printed matter; and
   displaying the inspection-allowable time and the inspection-required time on a display unit.

With the printing inspection system according to (((1))), it is possible to select and set, from among the plurality of inspection items, a combination of inspection items that enable inspection of the printed matter at an inspection speed keeping up with the printing speed.

With the printing inspection system according to (((2))), it is possible to automatically present, to the user, the combination of the inspection items in which the inspection-required time does not exceed the inspection-allowable time.

With the printing inspection system according to (((3))), by simply setting up the inspection priority list in advance, it is possible to automatically present, to the user, the combination of the inspection items in which the inspection-required time does not exceed the inspection-allowable time.

With the printing inspection system according to (((4))), it is possible to select a combination of the inspection items in which the needed inspection content of the printed matter is realized without being limited by the printing speed.

With the printing inspection system according to (((5))), it is possible to prevent a situation in which the inspection speed fails to keep up with the printing speed even in a case where the combination of the inspection items in which the inspection-required time exceeds the inspection-allowable time is selected.

With the program according to (((6))), it is possible to select and set, from among the plurality of inspection items, a combination of inspection items that enable inspection of the printed matter at an inspection speed keeping up with the printing speed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: terminal device
11: CPU
12: memory
13: storage device
14: communication interface
15: user interface device
16: control bus
20: printing device
21: reading device
22: switching device
30: inspection device
32: operation input unit
33: display unit
34: data transmission/reception unit
35: control unit
36: data storage unit
40: network

## Claims

1. A printing inspection system comprising:
a processor configured to:
calculate, as an inspection-allowable time, an inspection upper limit time per sheet of paper for which inspection is performable without stopping a printing process, based on a printing speed of printed matter to be printed;
calculate, as an inspection-required time, an inspection time per sheet of paper in a case where an inspection item selected from among a plurality of inspection items is performed on the printed matter; and
display the inspection-allowable time and the inspection-required time on a display unit.

2. The printing inspection system according to claim 1, wherein the processor is configured to:
present, to a user, a combination of inspection items selected in order of higher preset priority from among the plurality of inspection items, within a range in which the inspection-required time does not exceed the inspection-allowable time.

3. The printing inspection system according to claim 2, further comprising:
a memory,
wherein the memory stores an inspection priority list in which a priority is set for each type of the inspection items, and
the processor is configured to:
select inspection items in order of higher priority set in the inspection priority list from among the plurality of inspection items, and present, to the user, a combination of inspection items in which an inspection-required time by the selected inspection items does not exceed the inspection-allowable time.

4. The printing inspection system according to any one of claims 1 to 3, wherein the processor is configured to:
in a case where inspection content of the printed matter is selected to be prioritized over maintaining the printing speed, enable selection of a combination of inspection items in which the inspection-required time exceeds the inspection-allowable time.

5. The printing inspection system according to claim 4, wherein the processor is configured to:
in a case where the combination of the inspection items in which the inspection-required time exceeds the inspection-allowable time is selected, change the printing speed of the printed matter such that the inspection-allowable time is longer than an inspection-required time by the selected combination of the inspection items.

6. A program causing a computer to execute:
calculating, as an inspection-allowable time, an inspection upper limit time per sheet of paper for which inspection is performable without stopping a printing process, based on a printing speed of printed matter to be printed;
calculating, as an inspection-required time, an inspection time per sheet of paper in a case where an inspection item selected from among a plurality of inspection items is performed on the printed matter; and
displaying the inspection-allowable time and the inspection-required time on a display unit.

7. A printing inspection method comprising:
calculating, as an inspection-allowable time, an inspection upper limit time per sheet of paper for which inspection is performable without stopping a printing process, based on a printing speed of printed matter to be printed;
calculating, as an inspection-required time, an inspection time per sheet of paper in a case where an inspection item selected from among a plurality of inspection items is performed on the printed matter; and
displaying the inspection-allowable time and the inspection-required time on a display unit.
